# EUROPEAN PATENT SPECIFICATION

(11) **EP 0 900 498 B1**
(45) Date of publication and mention of the grant of the patent: **05.02.2003**
(21) Application number: 97931010.9
(22) Date of filing: 29.05.1997
(51) Int. Cl.: H04N 5/913

(54) **METHOD AND APPARATUS FOR COMPRESSION COMPATIBLE VIDEO FINGERPRINTING**
VERFAHREN UND VORRICHTUNG ZUM ANBRINGEN KOMPRIMIERFÄHIGER VIDEO-FINGERABDRÜCKE
PROCEDE ET DISPOSITIF A EMPREINTES VIDEO COMPATIBLES EN COMPRESSION

(30) Priority: 29.05.1996 US 18389 P
(43) Date of publication of application: 10.03.1999
(73) Proprietor: MACROVISION CORPORATION, Sunnyvale, CA 94089 (US)
(72) Inventor: RYAN, John, O., Cupertino, CA 95014 (US)
(74) Representative: Needle, Jacqueline
(86) International application number: US9709211
(87) International publication number: WO97046012

(56) References cited:
- EP-A- 0 690 595

## Description

The present invention relates to a method and apparatus of fingerprinting a video image.

US-A-5,739,864 describes a video fingerprint method in which a low frequency low level signal is inserted within a video signal, such that is not observable to the viewer, but is readily detectable by a special detection circuit. This low level signal operates over many fields in a manner that makes it possible to detect and identify the source of the signal. However, this fingerprint method may not be compatible with certain video compression systems. US-A-5,659,613 provides a scrambling system for various recording media.

EP-A-0690595 describes a method and apparatus in which identification information is encoded into a stream of digital data representing an object. The digital data representing an object is modified to add embedded identification information into the data. The modification is done such that the resultant changes to the object are not objectionable to the user. By comparing the original data to the modified data, the possessor of the original data can recover the embedded identification information. However the identification information is effectively unavailable to anyone not possessing the original data.

There is a need for a secure video fingerprint method having the property that the fingerprinted video is compatible with the various video compression systems currently in use. In particular, it should be compatible with compression systems based on the Discrete Cosine Transform (DCT), which may employ inter-field redundance coding. Motion picture experts group (MPEG-1 and MPEG-2) are examples of such compression systems. It is generally anticipated that the video signal will be subjected to fingerprinting, compression, decompression and fingerprint detection processes, usually in that order. Generally, therefore, the fingerprinted video will be subjected to compression and decompression processes prior to the fingerprint detection.

Prior art fingerprint systems may tend to disturb the inter-field redundancy in a television signal upon which known compression systems depend for proper operation. When the inter-field redundancy is disturbed, the bit rate requirements for the compression system rise, possibly to an unacceptable level, for the transmission path of the compressed video signal.

The present invention seeks to provide a fingerprint system which does not have the problems and disadvantages identified above.

According to the present invention there is provided a method of fingerprinting an image comprising the steps of:
providing a predetermined warp pattern commensurate with a selected very slight local spatial distortion to be applied to the image; and
applying the selected very slight local spatial distortion to the image to locally displace individual portions of the image with respect to their normal locations, in response to the warp pattern.

Embodiments of methods of the invention overcome the compression system incompatibility of prior art fingerprint systems and provide a fingerprinted image where the fingerprint is not observable to a viewer but yet conveys information, for example, in an active video signal.

Furthermore, embodiments of the invention may meet the following requirements:
The fingerprint method is applicable to either analog (NTSC, PAL, SECAM) or digital (CCIR-601) video signals.
The fingerprint method intrinsically provides a high level of resistance to hacking. In other words, it is very difficult to remove the fingerprint from the image
The fingerprint method is able to convey information in entertainment applications such as video movies, and television (TV) shows. The fingerprint method does not affect the entertainment value of the video image as it is securely concealed within the image, but is readily detectable by, for example, a detection circuit in a disk or tape recorder or other signal processing apparatus.

Embodiments of the invention may ensure that a fingerprinted video signal appears as a normal video signal to most if not all video processing methods and devices designed to operate with unfringerprinted video signals.

Thus, a video signal fingerprinted by a method of the invention is compatible with all video recording, transmitting and processing devices likely to exist in a production or editing environment. Passage of the fingerprinted video through these devices does not cause the fingerprint to be removed or to be made more difficult to detect.

Methods of the intention may be made compatible with consumer video cassette recorders (VCRs). It is then possible to record the fingerprinted video signal on a consumer grade VCR and replay it later for detection without any likelihood of it being removed during the record/replay process.

In an embodiment, the method comprises storing a multiplicity of predetermined warp patterns commensurate with selected different patterns of local spatial distortions for application to the image.

For example, each warp pattern may be capable of imparting a selected degree of local spatial distortion to an image, such as a video image. In response to an operator's selection, a pattern select code may determine which stored warp pattern is supplied as a fingerprint signal to a warp engine. The warp engine in turn applies the selected warp pattern to the video image to correspondingly locally spatially distort the image. The slight distortion imparted by the selected warp pattern is generally not observable to a viewer, but may be detectable, for example, by a circuit in a recording device to prevent the recording device from copying the video signal.

In an embodiment, the method further comprises the steps of:
storing a plurality of predetermined warp patterns;
generating a pattern select code indicative of a warp pattern which is to be selected for application to the image; and
selecting the warp pattern for application to the image in response to the pattern select code.

To identify the warp pattern applied to the image, the method may further comprise the step of inserting the generated pattern select code into the fingerprinted image.

The invention also extends to apparatus for fingerprinting an image comprising:
means for providing a predetermined warp pattern commensurate with a selected very slight local spatial distortion to be applied to the image; and
means for applying the predetermined warp pattern to the image to effect the very slight local spatial distortion by locally displacing individual portions of the image from their normal locations.

In an embodiment, the apparatus further comprises:
means for storing the predetermined warp pattern;
the selected warp pattern being arranged to provide a very slight distortion which is unnoticeable in the fingerprinted image but is detectable electronically.

Preferably, the apparatus further comprises:
storage means constituting a warp pattern library for storing a multiplicity of predetermined warp patterns;
selecting means for selecting a predetermined warp pattern from the multiplicity of stored warp patterns for application to said image.

The apparatus may be used where the image to be fingerprinted comprises a successive plurality of changing video images over a period of time. The applying means of the apparatus may then be arranged to apply a selected succession of changing warp patterns over a predetermined period of time.

According to a further aspect of the present invention, there is provided a method of detecting a fingerprint in a received image, where an image has been fingerprinted by causing a very slight local spatial distortion to an original image in response to the application of a predetermined warp pattern, the detection method comprising the steps of:
detecting spatial displacements in a received image, and
comparing the detected spatial displacements with reference warp patterns to determine the existence of a fingerprint and the information conveyed thereby.

The invention also extends to apparatus for detecting a fingerprint in a received image, where an image has been fingerprinted by causing a very slight local spatial distortion to an original image in response to the application of a predetermined warp pattern, the apparatus comprising:
detecting means for detecting spatial displacements in a received image, and
means for comparing the detected spatial displacements with reference warp patterns to determine the existence, in the received image, of a fingerprint and the information conveyed thereby.

The detection of the existence of a fingerprint may be used to prevent copying of the received image. Additionally and/or alternatively, the original unfingerprinted video signal may be compared with an unauthorized copy of a fingerprinted video signal, to determine the origin, date, etc., of the unauthorized copy. In the event that a fingerprinted video signal is illegally recorded onto a disk or tape, the spatial distortion imparted by the fingerprint technique remains with the recorded video image. Thus, a subsequent comparison between the pixel positions of a fingerprinted signal (that is, an illegal copy) and the unfingerprinted original signal, can be used to identify the source of the illegal copy.

Embodiments of the present invention will hereinafter be described, by way of example, with reference to the accompanying drawings, in which:-
FIG. 1 shows a photograph of an image in which no fingerprint has been applied;
FIG. 2 shows a photograph of an image in which a fingerprint has been applied in accordance with an embodiment of the invention;
FIG 3. is a block diagram showing an embodiment of a fingerprint apparatus of the invention; and
FIG 4. is a block diagram showing an embodiment of a fingerprint detection apparatus of the invention.

A method and apparatus for fingerprinting a video image as described herein may be used with various program distribution media such as digital video disk (DVD) or digital video cassette recorder (DVCR), as well as broadcast and cable video distribution channels.

A compression system such as, for example, MPEG 1 and 2, relies on the condition that a high degree of redundancy exists in the image, both intra-field and inter-field redundancy.

Embodiments of the invention employ the same basic spatial image distortion concept which is described in US-A-5,739,864. However, in this case a much smaller distortion is applied which can still be detected by a suitable circuit and which will not be noticeable to a viewer.

To facilitate an understanding of the invention, consider the following analogy. A scene is viewed through a sheet of colorless transparent glass with a slightly bumpy surface. By specifying very slight "bumpiness" parameters, the resultant image will appear to be identical to the undistorted image, although the positions of the specific pixels in the image are slightly shifted relative to their normal positions. In effect, the applied fingerprint does not distort the image visibly, but the small distortion may still be readily detectable by a suitable detector circuit. For example, a recorder having this fingerprint detector circuit could be prevented from copying the fingerprinted video signal. Thus, in effect the fingerprint added to the video signal is a means for conveying a message or instruction which, in the above example, instructs the recorder not to copy the video signal. Alternatively, in the event that an illegal copy of the fingerprinted video signal is found, the message conveyed can be used to identify the source of the illicit copy, the date of recording, or other information.

Although the present invention conveys information within the video signal, the fingerprint technique is compatible with all conceivable forms of compression systems because the application of the fingerprint does not materially increase the information content or the video signal. The various pixels may be very slightly closer or further from each other in any direction. Thus it follows that the high frequency content or detail is very slightly increased and decreased in various areas of the image, but there is no noticeable change in the bit rate of the compressed (or uncompressed) signal.

Thus, techniques of the invention are based upon a "local spatial distortion" of the active video signal. More particularly, methods of the invention comprise a particular kind of optical image scrambling which, when modeled in the video domain, becomes the basis of a video fingerprint system which has the required desirable properties and advantages.

A video processing means for providing a fingerprinting method of the invention embodies a slight local spatial image distortion of a video signal which is not visually noticeable but which is electronically detectable. Such a device is referred to herein as a spatial image distortion (SID) fingerprint inserter and may have the following properties:
- displacement of each pixel of the original image by a slight amount unnoticeable to the eye (which may be zero) horizontally and/or vertically.
- maintaining a given pixel in the fingerprinted image with the same set of contiguous pixels that it had in the original image.

An array of number pairs, one pair for each pixel, is needed to describe the fingerprint signal for each field. The field fingerprint signal, herein termed a "warp" pattern for ease of description, may be arranged to remain fixed for relatively long periods, to change slowly with time, or to change from field to field. By appropriate choice of warp patterns and by limitation of their range so as to be detectable electronically but not visually noticeable, it is possible to effect a fingerprint system having all of the properties and requirements specified above.

There are an infinite number of warp patterns available each of which designates the amount of displacement horizontally and vertically of each pixel in the image. The warp pattern can be fixed for an entire movie or vary throughout the movie.

In one embodiment of a method of the invention, the warp pattern may remain unchanged throughout the entire movie or program, and that particular pattern may designate a particular copy, or the broadcast time and source, of the program for broadcast application. If illicit copies of the program are discovered later, these copies may be compared with the original unwarped program in a suitable correlating device which identifies the specific warp pattern used, to thereby identify the source of the illicit copy.

For this application, the warp pattern can be "morphed" from one pattern to another, or can be faded to zero warp and back again, preferably gradually over a selected time interval such as a number of frames up to a longer time interval of a plurality of seconds. The purpose for applying changing warp patterns is to increase the level of security, that is, to make it even more difficult for unauthorized persons to discover the identity of the warp pattern and thus override the fingerprint process.

In another application, techniques described herein may be used to convey instructions to a device such as, for example, a video recording device. The presence of the warp pattern may be used to instruct the recording device not to copy the particular program carrying the warp pattern. In this case, it is desirable that the warp pattern vary over time at a rate just enough to facilitate detection, but not so fast as to cause visible change in the picture when viewed by critical viewers. Clearly, if the warp pattern is fixed in time it will be difficult or impossible to detect it without reference to the unwarped image because of its subtle nature and because normal geometrical distortions in the camera or picture origination device may generate "natural" warp patterns.

In this latter application, the detector may be arranged to look for small changing geometrical distortions of the image which follow a pre-ordained pattern. In the presence of rapidly changing scenes the detector would not be expected to work reliably. However, most programs contain periods of little scene change when reliable unambiguous detection becomes feasible. For copy protection applications, for example, it would not matter if the detection process took several minutes to make an unambiguous decision that the program is not to be copied.

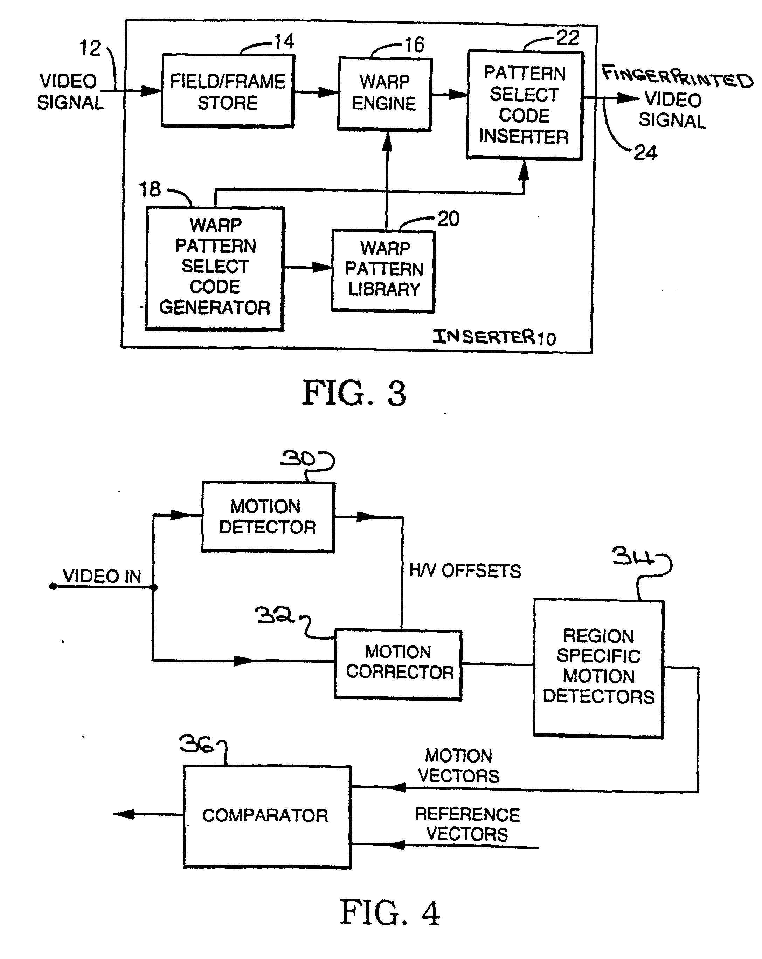

FIG. 3 illustrates an embodiment of a fingerprint inserter 10. A digital video signal is supplied to a field/frame store 14 via an input lead 12. The field/frame store 14 is arranged to store a field or frame of video and to supply the video to a first input of a warp engine 16. In response to a user selection, a warp pattern selected code generator 18 generates a warp pattern select code which, in turn, selects a desired warp pattern from a warp pattern library 20. The warp pattern library 20, may include, for example, a look up table. The selected warp pattern is supplied as a fingerprint signal to a second input of the warp engine 16. The warp pattern is applied by the warp engine 16 to the field or frame of video from the field/frame store 14 whereby pixel positions in the appropriate lines of the field or frame of video are distorted. The output of the warp engine 16 consists of a fingerprinted video signal which is supplied to a pattern select code inserter 22 which inserts a code identifying the selected pattern into the fingerprinted video signal. The fingerprinted video signal is then coupled via an output lead 24 to any downstream digital processing circuits and/or devices used in associated video processing applications.

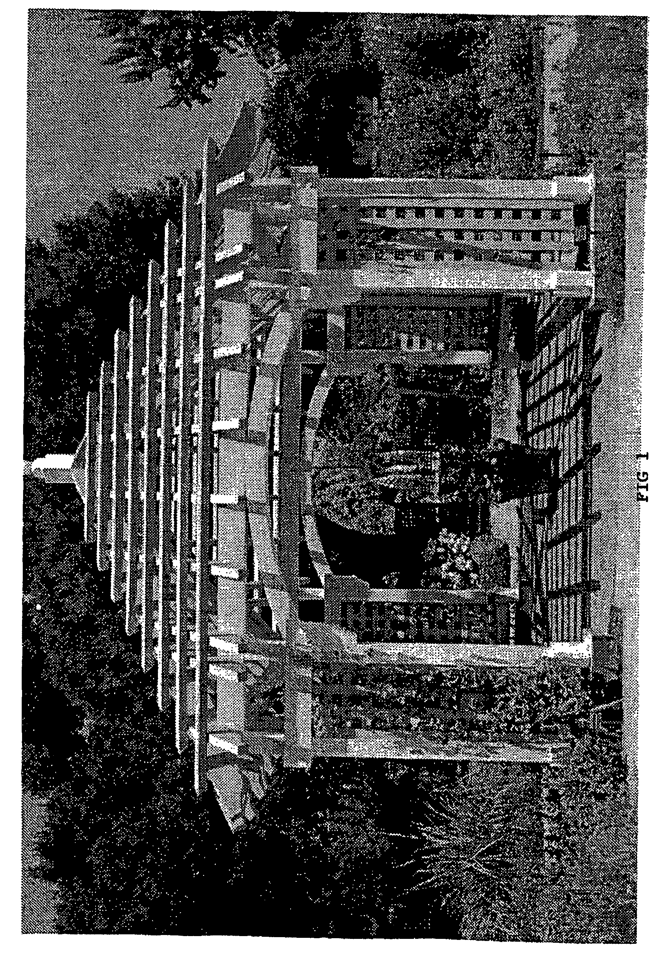

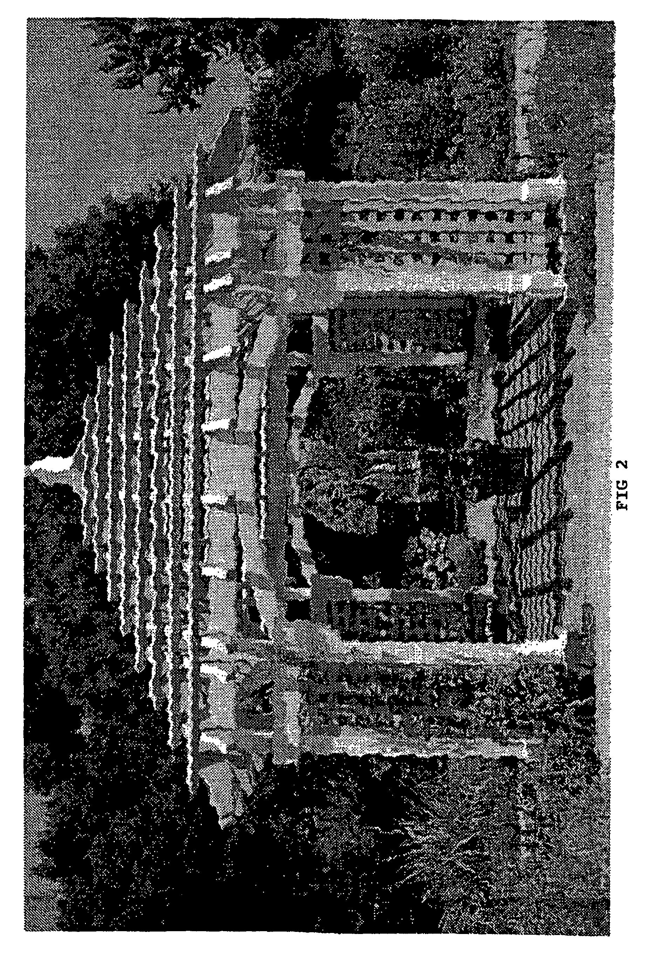

FIGs. 1 and 2 illustrate, respectively, an original picture or video image without a fingerprint, and that same video image with a fingerprint added by a method of the invention. It will be seen from FIG. 2, that the application of a warp pattern does not cause a visually noticeable distortion in the image.

The fact that a video image has undergone varying spatial image distortion according to some pre-arranged pattern and/or timetable may be used to instruct a video recorder not to copy this video, for example. A special detector circuit in a video recorder makes a determination that the video has been fingerprinted according to the pre-arranged pattern and generates a "don't copy" command.

For example, a particular SID pattern may be used which generates a slight vertical nonlinearity in the scene, with the centre of the image held fixed whilst the top and bottom regions are caused to meander vertically about their proper locations at a predetermined rate. The amount of the displacement may be a fraction of a percent of picture height so as to be invisible, and the rate of change may be, for example, one cycle per second.

An example of a fingerprint detector is illustrated in Figure 4. Firstly, in order to minimize the effect of normal scene movements, a motion detector 30 examines the edges and the centre region of the image for movement and applies a compensating correction by way of a motion corrector 32 to the video which is fed to the SID detector. In the event that large changes are detected, the measurement process is temporarily halted. This makes it easier for the SID detector to detect the SID pattern in the presence of normal scene motion. The motion-compensated video is then applied to region specific motion detectors 34 and subjected to motion detection in only those regions affected by the SID pattern, in this case regions near the top and bottom of the image. The resulting motion vectors are examined in a comparator 36 for correspondence both in magnitude and time with reference vectors expected for the particular SID pattern used, and if a correspondence is found the "fingerprint" has been detected.

In this embodiment, the fact that the video has undergone spatial image distortion according to some pre-arranged pattern and/or timetable is used to indicate the source of an illicit copy. The various sources or prints of the original video are subjected to different SID patterns which uniquely identify the source or the print. At a later time, if an illicit copy of the program surfaces, it will be possible to identify the source or print from which this copy was made.

To do this, the original video (from an archive) is compared with the illicit copy. The two video signals are first frame-synchronized and the signal levels are adjusted to be equal. Any horizontal or vertical offsets between the two images are also corrected for using simple subtraction techniques to show up difference.

In one embodiment of the invention, the SID may be applied only to specific segments of the video program. In another embodiment, a specific SID pattern may be faded in and out according to a specific timetable. In addition, these techniques may be combined to increase the possible permutations. In an example of the latter, a particular SID pattern may be used which generates a slight horizontal non-linearity in the scene, such that while both sides of the image remain fixed, the centre meanders to the left and right of its proper location at a predetermined rate. Furthermore, only certain time segments of the program are subjected to this distortion. An operator viewing the subtracted images on a monitor can easily see this SID pattern, note the time segments, when each occurs and its rate of change, and thereby identify the source of the illicit copy.

It will be appreciated that methods and apparatus of the invention may be applied to media other than video signals, such as, for example, to photographs, and computer generated images. For example, the local spatial distortion technique may be used to identify the origin of illegal copies of proprietary photographs. To this end, a negative of a photograph may be electronically reproduced several times using a slightly different warp pattern each time by altering the scanning beam very slightly. Each resulting new negative thus contains a different fixed spatial distortion which can be detected subsequently as described above to identify the photograph and thus the source of any illegal copies thereof.

It will be appreciated that variations in, and modifications to, the embodiments described and illustrated may be made within the scope of the appended claims.

## Claims

1. A method of fingerprinting an image comprising the steps of:
providing a predetermined warp pattern commensurate with a selected very slight local spatial distortion to be applied to the image; and
applying the selected very slight local spatial distortion to the image to locally displace individual portions of the image with respect to their normal locations, in response to the warp pattern.

2. A method as claimed in Claim 1, wherein the local spatial distortion produced by the associated predetermined warp pattern represents conveyed information such as a notice that the image is not to be copied, the originating source and/or the date of the image.

3. A method as claimed in Claim 1 or Claim 2, further comprising:
storing a multiplicity of predetermined warp patterns commensurate with selected different patterns of local spatial distortions for application to the image.

4. A method as claimed in any preceding claim, wherein the warp patterns are such that the very slight local spatial distortion applied to the image renders the fingerprinted image watchable while being electronically detectable.

5. A method as claimed in any preceding claim, further comprising:
retaining information which identifies the predetermined warp pattern applied to an image to provide for subsequent identification of a copy of the fingerprinted image.

6. A method as claimed in any of Claims 1 to 4, further comprising the steps of:
storing a plurality of predetermined warp patterns;
generating a pattern select code indicative of a warp pattern which is to be selected for application to the image; and
selecting the warp pattern for application to the image in response to the pattern select code.

7. A method as claimed in Claim 6, further comprising the step of:
inserting the generated pattern select code into the fingerprinted image.

8. A method as claimed in any preceding claim, further comprising:
supplying the original image in the form of a two-dimensional array of pixels; and
applying the very slight local spatial distortion by locally spatially displacing very slightly the pixels within the array whilst retaining inter-pixel relationships, in response to the predetermined warp pattern.

9. A method as claimed in Claim 8, wherein:
each pixel of the image is displaced by a selected slight amount, beginning with a zero amount, horizontally and/or vertically; and
a given pixel in the displaced pixels is maintained with the same set of contiguous pixels as it had in the original image.

10. A method as claimed in Claim 9, wherein the pixels are displaced a selected fraction of a pixel.

11. A method as claimed in any preceding claim, wherein the image to be fingerprinted is a video image, and wherein the method comprises the steps of:
supplying a field or frame of said video image; and
locally spatially displacing individual portions of said field or frame of said video image from their normal locations in response to said predetermined warp pattern.

12. A method as claimed in any preceding claim, wherein the image to be fingerprinted comprises a successive plurality of changing video images over a period of time, and wherein a fixed warp pattern is applied to the plurality of images over the period of time.

13. A method as claimed in any of Claims 1 to 11, wherein the image to be fingerprinted comprises a successive plurality of changing video images over a period of time, and wherein changing warp patterns are applied to the plurality of images over the period of time.

14. Apparatus for fingerprinting an image comprising:
means (20) for providing a predetermined warp pattern commensurate with selected very slight local spatial distortion to be applied to the image; and
means (16) for applying the predetermined warp pattern to the image to effect the very slight local spatial distortion by locally displacing individual portions of the image from their normal locations.

15. Apparatus as claimed in Claim 14, further comprising:
means (20) for storing the predetermined warp pattern;
the selected warp pattern being arranged to provide a very slight distortion which is unnoticeable in the fingerprinted image but is detectable electronically.

16. Apparatus as claimed in Claim 14 or Claim 15, further comprising:
storage means (20) constituting a warp pattern library for storing a multiplicity of predetermined warp patterns;
selecting means (18) for selecting a predetermined warp pattern from the multiplicity of stored warp patterns for application to said image.

17. Apparatus as claimed in any of Claims 14 to 16, wherein the original image is in the form of a two-dimensional array of pixels, and wherein said applying means comprises a warp engine (16) for receiving said array of pixels, said warp engine (16) being responsive to said predetermined warp pattern for displacing the pixels of the array by selected very slight amounts whilst maintaining each pixel in the displaced pixels with the same set of pixels originally contiguous therewith.

18. Apparatus as claimed in any of Claims 14 to 17, wherein the image to be fingerprinted is a video image, the apparatus further comprising a field/frame store (14) for storing fields or frames of the video image, and applying a field or frame to said applying means (16).

19. Apparatus as claimed in any of Claims 14 to 18, wherein the image to be fingerprinted comprises a successive plurality of changing video images over a period of time, and wherein said applying means (16) is arranged to apply a selected succession of changing warp patterns over a predetermined period of time.

20. Apparatus as claimed in any of Claims 14 to 19, further comprising:
means (20) for storing a plurality of predetermined warp patterns; and
means (18) for generating a pattern select code indicative of a warp pattern which is to be selected for application to the image;
the pattern select code generating means (18) having an output coupled to said storing means (20).

21. Apparatus as claimed in Claim 20, further comprising a pattern select code inserter (22) arranged to insert the generated pattern select code into the fingerprinted image.

22. Apparatus as claimed in Claim 20 or Claim 21, wherein:
said storing means (20) includes a look up table of a mutiplicity of warp patterns; and
said applying means (16) includes a warp engine for locally displacing individual portions of the image in accordance with the selected warp pattern.

23. A method of detecting a fingerprint in a received image, where an image has been fingerprinted by causing a very slight local spatial distortion to an original image in response to the application of a predetermined warp pattern, the detection method comprising the steps of:
detecting spatial displacements in a received image, and
comparing the detected spatial displacements with reference warp patterns to determine the existence of a fingerprint and the information conveyed thereby.

24. A method as claimed in Claim 23, further comprising the step of:
preventing copying of the received image in response to the detection of a fingerprint therein.

25. Apparatus for detecting a fingerprint in a received image, where an image has been fingerprinted by causing a very slight local spatial distortion to an original image in response to the application of a predetermined warp pattern, the apparatus comprising:
detecting means (30,34) for detecting spatial displacements in a received image, and
means (36) for comparing the detected spatial displacements with reference warp patterns to determine the existence, in the received image, of a fingerprint and the information conveyed thereby.

26. Apparatus as claimed in Claim 25, further comprising means responsive to said comparing means (36) for preventing copying of a received image in which a fingerprint is determined to exist.

## Patentansprüche

1. Verfahren, um ein Bild mit einem Fingerabdruck zu versehen, mit den Schritten:
Bereitstellen eines vorbestimmten Verzerrungsmusters, das einer ausgewählten, sehr geringen, lokalen räumlichen Verzerrung entspricht, die auf das Bild angewendet wird; und
Anwenden der ausgewählten, sehr geringen, lokalen räumlichen Verzerrung auf das Bild, um in Reaktion auf das Verzerrungsmuster einzelne Bereiche des Bildes relativ zu ihren normalen Positionen lokal zu verlagern.

2. Verfahren nach Anspruch 1, bei dem die lokale räumliche Verzerrung, die durch das zugehörige vorbestimmte Verzerrungsmuster erzeugt wird, übertragene Informationen darstellt, wie zum Beispiel ein Hinweis, dass das Bild nicht zu kopieren ist, die Ursprungsquelle und/oder das Datum des Bildes.

3. Verfahren nach Anspruch 1 oder Anspruch 2, außerdem mit:
Speichern einer Vielzahl von vorbestimmten Verzerrungsmustern, die ausgewählten, verschiedenen Mustern von lokalen räumlichen Verzerrungen entsprechen, zur Anwendung auf das Bild.

4. Verfahren nach einem der vorhergehenden Ansprüche, bei dem die Verzerrungsmuster so sind, dass die sehr geringe, lokale räumliche Verzerrung, die auf das Bild angewendet wird, das mit dem Fingerabdruck versehene Bild betrachtbar macht, wobei es elektronisch erfassbar ist.

5. Verfahren nach einem der vorhergehenden Ansprüche, außerdem mit:
Aufrechthalten von Informationen, die das vorbestimmte Verzerrungsmuster identifizieren, das auf ein Bild angewendet wird, um eine spätere Identifikation von einer Kopie des mit dem Fingerabdruck versehenen Bildes zu ermöglichen.

6. Verfahren nach einem der Ansprüche 1 bis 4, außerdem mit den Schritten:
Speichern einer Vielzahl von vorbestimmten Verzerrungsmustern;
Erzeugen eines Musterauswahlcodes, der ein Verzerrungsmuster angibt, das für die Anwendung auf das Bild auszuwählen ist; und
Auswählen des Verzerrungsmusters zur Anwendung auf das Bild in Reaktion auf den Musterauswahlcode.

7. Verfahren nach Anspruch 6, außerdem mit dem Schritt:
Einfügen des erzeugten Musterauswahlcodes in das mit dem Fingerabdruck versehene Bild.

8. Verfahren nach einem der vorhergehenden Ansprüche, außerdem mit:
Bereitstellen des Originalbildes in Form eines zweidimensionalen Arrays aus Pixeln; und
Anwenden der sehr geringen, lokalen räumlichen Verzerrung durch lokale räumliche, sehr geringe Verlagerung der Pixel in dem Array in Reaktion auf das vorbestimmte Verzerrungsmuster, wobei die Pixel-Zwischen-Beziehungen aufrechterhalten werden.

9. Verfahren nach Anspruch 8, bei dem:
jedes Pixel von dem Bild mit einem ausgewählten kleinen Betrag, beginnend bei einem Null-Betrag, horizontal und/oder vertikal verlagert wird; und
ein gegebenes Pixel von den verlagerten Pixeln mit dem gleichen Satz von angrenzenden Pixeln aufrechterhalten wird wie in dem Originalbild.

10. Verfahren nach Anspruch 9, bei dem die Pixel mit einem ausgewählten Fraktion von einem Pixel verlagert werden.

11. Verfahren nach einem der vorhergehenden Ansprüche, bei dem das Bild, das mit einem Fingerabdruck zu versehen ist, ein Videobild ist, und wobei das Verfahren die Schritte umfasst:
Bereitstellen von einem Halbbild oder Vollbild des Videobildes; und
lokales räumliches Verlagern einzelner Bereiche von dem Halbbild oder dem Vollbild des Videobildes relativ zu ihren normalen Positionen in Reaktion auf das vorbestimmte Verzerrungsmuster.

12. Verfahren nach einem der vorhergehenden Ansprüche, bei dem das Bild, das mit einem Fingerabdruck zu versehen ist, über eine Zeitperiode eine aufeinanderfolgende Vielzahl von sich ändernden Videobildern enthält, und wobei über die Zeitperiode ein festes Verzerrungsmuster auf die Vielzahl von Bildern angewendet wird.

13. Verfahren nach einem der Ansprüche 1 bis 11, bei dem das Bild, das mit einem Fingerabdruck zu versehen ist, über eine Zeitperiode eine aufeinanderfolgende Vielzahl von sich ändernden Videobildern enthält, und wobei über die Zeitperiode sich ändernde Verzerrungsmuster auf die Vielzahl von Bildern angewendet werden.

14. Vorrichtung, um ein Bild mit einem Fingerabdruck zu versehen, mit:
einer Einrichtung (20), um ein vorbestimmtes Verzerrungsmuster zur Verfügung zu stellen, das einer ausgewählten, sehr geringen, lokalen räumlichen Verzerrung entspricht, die auf das Bild angewendet wird; und
einer Einrichtung (16), um das vorbestimmte Verzerrungsmuster auf ein Bild anzuwenden, um die sehr geringe, lokale räumliche Verzerrung zu bewirken, indem einzelne Bereiche des Bildes relativ zu ihren normalen Positionen lokal verlagert werden.

15. Vorrichtung nach Anspruch 14, außerdem mit:
einer Einrichtung (20) zum Speichern des vorbestimmten Verzerrungsmusters;
wobei das ausgewählte Verzerrungsmuster dazu ausgestaltet ist, um eine sehr geringe Verzerrung zu bewirken, die in dem mit dem Fingerabdruck versehenen Bild nicht bemerkbar aber elektronisch erfassbar ist.

16. Vorrichtung nach Anspruch 14 oder Anspruch 15, außerdem mit:
einer Speichereinrichtung (20), die eine Verzerrungsmuster-Bibliothek bildet, um eine Vielzahl von vorbestimmten Verzerrungsmustern zu speichern;
einer Auswahleinrichtung (18), um ein vorbestimmtes Verzerrungsmuster aus der Vielzahl von gespeicherten Verzerrungsmustern zur Anwendung auf das Bild auszuwählen.

17. Vorrichtung nach einem der Ansprüche 14 bis 16, bei der das Originalbild in der Form eines zweidimensionalen Arrays aus Pixeln vorliegt, und bei der die Anwendungseinrichtung eine Verzerrungsmaschine (16) aufweist, um das Array aus Pixeln zu empfangen, wobei die Verzerrungsmaschine (16) auf das vorbestimmte Verzerrungsmuster anspricht, um die Pixel des Arrays mit ausgewählten, sehr geringen Werten zu verlagern, wobei jedes Pixel der verlagerten Pixel mit dem gleichen Satz von Pixeln beibehalten wird, die ursprünglich daran angrenzten.

18. Vorrichtung nach einem der Ansprüche 14 bis 17, bei der das Bild, das mit einem Fingerabdruck zu versehen ist, ein Videobild ist, wobei die Vorrichtung außerdem einen Halbbild/Vollbild-Speicher (14) aufweist, um Halbbilder oder Vollbilder des Videobildes zu speichern, und um ein Halbbild oder Vollbild bei der Anwendungseinrichtung (16) anzuwenden.

19. Vorrichtung nach einem der Ansprüche 14 bis 18, bei der das Bild, das mit einem Fingerabdruck zu versehen ist, über eine Zeitperiode eine aufeinanderfolgende Vielzahl von sich ändernden Videobildern enthält, und wobei die Anwendungseinrichtung (16) dazu ausgestaltet ist, wobei über eine vorbestimmte Zeitperiode eine aufeinanderfolgende Vielzahl von sich ändernden Verzerrungsmustern anzuwenden.

20. Vorrichtung nach einem der Ansprüche 14 bis 19, außerdem mit:
einer Einrichtung (20) zum Speichern einer Vielzahl von vorbestimmten Verzerrungsmustern; und
einer Einrichtung (18) zum Erzeugen eines Musterauswahlcodes, der ein Verzerrungsmuster angibt, das für die Anwendung auf das Bild ausgewählt wird;
wobei die Musterauswahlcode-Erzeugungseinrichtung (18) einen Ausgang hat, der mit der Speichereinrichtung (20) gekoppelt ist.

21. Vorrichtung nach Anspruch 20, außerdem mit einem Musterauswahlcode-Einsetzer (22), der dazu ausgestaltet ist, um den erzeugten Musterauswahlcode in das mit dem Fingerabdruck versehene Bild einzusetzen.

22. Vorrichtung nach Anspruch 20 oder Anspruch 21, bei der:
die Speichereinrichtung (20) eine Nachschlagetabelle mit einer Vielzahl von Verzerrungsmustern enthält; und
die Anwendungseinrichtung (16) eine Verzerrungsmaschine aufweist, um einzelne Bereiche des Bildes entsprechend dem ausgewählten Verzerrungsmuster lokal zu verlagern.

23. Verfahren zum Erfassen eines Fingerabdrucks in einem empfangenen Bild, wobei ein Bild mit einem Fingerabdruck versehen wird, indem bei einem Originalbild in Reaktion auf die Anwendung eines vorbestimmten Verzerrungsmusters eine sehr geringe, lokale räumliche Verzerrung bewirkt wird, wobei das Erfassungsverfahren die Schritte umfasst:
Erfassen von räumlichen Verlagerungen in einem empfangenen Bild; und
Vergleichen der erfassten räumlichen Verlagerungen mit Referenz-Verzerrungsmustern, um das Vorhandensein eines Fingerabdrucks und die daraus abgeleiteten Informationen zu bestimmen.

24. Verfahren nach Anspruch 23, außerdem mit dem Schritt:
Verhindern des Kopierens eines empfangenen Bildes in Reaktion auf das Erfassen eines Fingerabdrucks darin.

25. Vorrichtung zum Erfassen eines Fingerabdrucks in einem empfangenen Bild, wobei ein Bild mit einem Fingerabdruck versehen ist, indem bei einem Ursprungsbild in Reaktion auf die Anwendung von einem vorbestimmten Verzerrungsmuster eine sehr geringe, lokale räumliche Verlagerung bewirkt wird, wobei die Vorrichtung aufweist:
eine Erfassungseinrichtung (30, 34) zum Erfassen von räumlichen Verlagerungen in einem empfangenen Bild; und
eine Einrichtung (36) zum Vergleichen der erfassten räumlichen Verlagerungen mit Referenz-Verzerrungsmustern, um in dem empfangenen Bild das Vorhandensein von einem Fingerabdruck und die daraus abgeleiteten Informationen zu bestimmen.

26. Vorrichtung nach Anspruch 25, außerdem mit einer Einrichtung, die auf die Vergleichseinrichtung (36) anspricht, um das Kopieren eines empfangenen Bildes zu verhindern, bei dem bestimmt worden ist, dass ein Fingerabdruck vorhanden ist.

## Revendications

1. Procédé de marquage par empreinte d'une image comprenant les étapes consistant à :
fournir une forme déformée prédéterminée proportionnée à une distorsion spatiale locale très légère sélectionnée à appliquer à l'image ; et
appliquer la distorsion spatiale locale très légère sélectionnée à l'image pour déplacer localement des parties individuelles de l'image par rapport à leurs emplacements normaux, en réponse à la forme déformée.

2. Procédé selon la revendication 1, dans lequel la distorsion spatiale locale produite par la forme déformée prédéterminée associée représente des informations transportées telles qu'un avertissement que l'image ne doit pas être copiée, la source d'origine et/ou la date de l'image.

3. Procédé selon la revendication 1 ou la revendication 2, comprenant en outre l'étape consistant à :
mémoriser une multiplicité de formes déformées prédéterminées proportionnées à des formes différentes sélectionnées de distorsion spatiale locale pour application à l'image.

4. Procédé selon l'une quelconque des revendications précédentes, dans lequel les formes déformées sont telles que la distorsion spatiale locale très légère appliquée à l'image rend l'image marquée regardable tout en étant électroniquement détectable.

5. Procédé selon l'une quelconque des revendications précédentes, comprenant en outre l'étape consistant à :
retenir les informations qui identifient la forme déformée prédéterminée appliquée à une image pour assurer une identification ultérieure d'une copie de l'image signée.

6. Procédé selon l'une quelconque des revendications 1 à 4, comprenant en outre les étapes consistant à :
mémoriser une pluralité de formes déformées prédéterminées ;
générer un code de sélection de forme indiquant une forme déformée qui doit être sélectionnée pour application à l'image ; et
sélectionner la forme déformée pour application à l'image en réponse au code de sélection de forme.

7. Procédé selon la revendication 6, comprenant en outre l'étape consistant à :
insérer le code de sélection de forme généré dans l'image signée.

8. Procédé selon l'une quelconque des revendications précédentes, comprenant en outre les étapes consistant à :
délivrer l'image d'origine sous forme de matrice bi-dimensionnelle de pixels ; et
appliquer la distorsion spatiale locale très légère en déplaçant spatialement et localement très légèrement les pixels à l'intérieur de la matrice tout en maintenant la relation interpixels, en réponse à la forme déformée prédéterminée.

9. Procédé selon la revendication 8, dans lequel :
chaque pixel de l'image est déplacé par une quantité légère sélectionnée, commençant avec une quantité zéro, horizontalement et/ou verticalement ; et
un pixel donné dans les pixels déplacés est maintenu avec le même ensemble de pixels contigus comme il était dans l'image d'origine.

10. Procédé selon la revendication 9, dans lequel les pixels sont déplacés sur une fraction sélectionnée d'un pixel.

11. Procédé selon l'une quelconque des revendications précédentes, dans lequel l'image à marquer est une image vidéo et dans lequel le procédé comprend les étapes consistant à :
délivrer une trame ou une image de ladite image vidéo ; et
déplacer spatialement et localement des parties individuelles de ladite trame ou de ladite image de ladite image vidéo depuis leurs emplacements normaux en réponse à ladite forme déformée prédéterminée.

12. Procédé selon l'une quelconque des revendications précédentes, dans lequel l'image à marquer comprend une pluralité successive d'images vidéo changeantes au cours d'une période de temps, et dans lequel une forme déformée fixe est appliquée à la pluralité d'images au cours de la période de temps.

13. Procédé selon l'une quelconque des revendications 1 à 11, dans lequel l'image à marquer comprend une pluralité successive d'images vidéo changeantes au cours de la période de temps et dans lequel les formes déformées changeantes sont appliquées à la pluralité des images au cours de la période de temps.

14. Appareil de marquage par empreinte d'une image comprenant :
un moyen (20) pour fournir une forme déformée prédéterminée proportionnée à une distorsion spatiale locale très légère sélectionnée qui doit être appliquée à l'image ; et
un moyen (16) pour appliquer la forme déformée prédéterminée à l'image pour effectuer la distorsion spatiale locale très légère en déplaçant localement des parties individuelles de l'image depuis leurs emplacements normaux.

15. Appareil selon la revendication 14, comprenant en outre :
un moyen (20) pour mémoriser la forme déformée prédéterminée ;
la forme déformée sélectionnée étant agencée pour fournir une distorsion très légère qui n'est pas visible dans l'image signée mais est électroniquement détectable.

16. Appareil selon la revendication 14 ou la revendication 15, comprenant en outre :
un moyen de mémorisation (20) constituant une bibliothèque de formes déformées pour mémoriser une multiplicité de formes déformées prédéterminées ;
un moyen de sélection (18) pour sélectionner une forme déformée prédéterminée à partir de la multiplicité de formes déformées mémorisées pour application à ladite image.

17. Appareil selon l'une quelconque des revendications 14 à 16, dans lequel l'image d'origine est sous forme de matrice bi-dimensionnelle de pixels, et dans lequel ledit moyen d'application comprend un moteur de déformation (16) pour recevoir ladite matrice de pixels, ledit moteur de déformation (16) étant sensible à ladite forme déformée prédéterminée pour déplacer les pixels de la matrice en des quantités très légères sélectionnées tout en maintenant chaque pixel dans les pixels déplacés avec le même ensemble de pixels contigus avec celui-ci à l'origine.

18. Appareil selon l'une quelconque des revendications 14 à 17, dans lequel l'image à marquer est une image vidéo, l'appareil comprenant en outre une mémoire de trame/image (14) pour mémoriser des trames ou cadres de l'image vidéo, et pour appliquer une trame ou un cadre d'image audit moyen d'application (16).

19. Appareil selon l'une quelconque des revendications 14 à 18, dans lequel l'image à marquer comprend une pluralité successive d'images vidéo changeantes au cours d'une période de temps, et dans lequel ledit moyen d'application (16) est agencé pour appliquer une succession sélectionnée de formes déformées changeantes au cours d'une période de temps prédéterminée.

20. Appareil selon l'une quelconque des revendications 14 à 19, comprenant en outre :
un moyen (20) pour mémoriser une pluralité de formes déformées prédéterminées ; et
un moyen (18) pour générer un code de sélection de forme indiquant une forme déformée qui doit être sélectionnée pour application à l'image ;
le moyen de génération de code de sélection de forme (18) ayant une sortie couplée audit moyen de mémorisation (20).

21. Appareil selon la revendication 20, comprenant en outre un dispositif d'insertion de code de sélection de forme (22) agencé pour insérer le code de sélection de forme généré dans l'image marquée.

22. Appareil selon la revendication 20 ou la revendication 21, dans lequel :
ledit moyen de mémorisation (20) comprend une table de consultation d'une multiplicité de formes déformées ; et
ledit moyen d'application (16) comprend un moteur de déformation pour déplacer localement les parties individuelles de l'image en conformité avec la forme déformée sélectionnée.

23. Procédé de détection d'un marquage par empreinte dans une image reçue, où une image a été marquée en entraînant une distorsion spatiale locale très légère sur une image d'origine en réponse à l'application d'une forme déformée prédéterminée, le procédé de détection comprenant les étapes consistant à :
détecter les déplacements spatiaux dans une image reçue, et
comparer les déplacements spatiaux détectés aux formes déformées de référence pour déterminer l'existence d'un marquage et des informations ainsi transportées.

24. Procédé selon la revendication 23, comprenant en outre l'étape consistant à :
empêcher la copie de l'image reçue en réponse à la détection d'une empreinte dans celle-ci.

25. Appareil pour détecter une empreinte dans une image reçue, où une image a été marquée en entraînant une distorsion spatiale locale très légère sur une image d'origine en réponse à l'application d'une forme déformée prédéterminée, l'appareil comprenant :
un moyen de détection (30, 34) pour détecter les déplacements spatiaux dans une image reçue ; et
un moyen (36) pour comparer les déplacements spatiaux détectés avec des formes déformées de référence pour déterminer l'existence, dans l'image reçue, d'une empreinte et des informations ainsi transportées.

26. Appareil selon la revendication 25, comprenant en outre un moyen sensible audit moyen de comparaison (36) pour empêcher la copie d'une image reçue dans laquelle l'existence d'une empreinte a été déterminée.
